# EUROPEAN PATENT SPECIFICATION

(11) **EP 3 022 518 B1**
(45) Date of publication and mention of the grant of the patent: **28.09.2016**
(21) Application number: 15707157.2
(22) Date of filing: 03.03.2015
(51) Int. Cl.: F41H 7/04, F41H 5/04

(54) **ARMORED LAND VEHICLE**
GEPANZERTES LANDFAHRZEUG
VÉHICULE TERRESTRE BLINDÉ

(30) Priority: 29.07.2014 EP 14382293
(43) Date of publication of application: 25.05.2016
(60) Divisional application: 16178275.0
(73) Proprietor: Santa Bárbara Sistemas, S.A., 28033 Madrid (ES)
(72) Inventor: BRIALES GRZIB, Cristian, E-28033 Madrid (ES); GONZÁLEZ GONZÁLEZ, Carmen, E-28033 Madrid (ES); HERNÁNDEZ HERNÁNDEZ, Fabián, E-28033 Madrid (ES)
(74) Representative: Balder IP Law, S.L.
(86) International application number: PCT/EP2015/054368
(87) International publication number: WO 2016/015877

(56) References cited:
- EP-A1- 2 000 352
- WO-A1-02/26523
- WO-A1-2010/041086
- GB-A- 444 568

## Description

### TECHNICAL FIELD

The invention relates to the protection of personnel in armored land vehicles against explosions.

### STATE OF THE ART

Armored vehicles are often used for transportation, including the transportation of personnel such as military personnel, in hostile environments. Armored vehicles are provided with armor to protect the occupants of the vehicle from threats such as gunfire and explosions. Protection against landmines and so-called Improvised Explosive Devices (IEDs) is typically provided by a bottom plate (belly armor), designed to have a substantial resistance against explosions. The bottom plate is typically a heavy metal plate, sometimes a multilayer plate, sometimes incorporating additional layers of metal, ceramic, composite and/or plastic material.

Although the bottom plate can often resist the effect of even very powerful explosions below the vehicle, such as the explosion of a landmine or an IED, without breaking, the bottom plate is frequently at least momentarily deformed as the result of the detonation. Thus, the bottom plate typically bulges upwards (that is, towards the inside of the vehicle) immediately following the explosion. Often, part of this deformation is elastic and the bottom plate rapidly returns to a state rather similar to the state before the explosion. However, at least for a short time the deformation can be very substantial, and the amplitude of the displacement of at least some portions of this bottom plate can typically be in the order of centimeters, such as in the order of one or two decimeters, with multi-G acceleration. The deformation of the bottom plate may cause severe injuries to persons within the vehicle, unless appropriately protected. For example, the detonation of an IED below an armored vehicle can cause the bottom plate or vehicle floor to accelerate. Locally, the bottom plate can reach accelerations above 50000 G and velocities of hundreds of m/s, and globally, when the local impulse is transferred to the rest of the structure such as walls and ceiling of the vehicle, these parts of the structure can reach velocities in the order of 10 m/s and suffer accelerations higher than 100 G, for example, in the order of 400-500 G.

That is, in addition to the risk for damage and injuries represented by a deformation of the bottom plate, the detonation of a landmine or IED can also produce a substantial acceleration of the structure or a portion of the structure of the vehicle, such as the structure to which the bottom plate is attached, including, for example, the walls and ceiling of the vehicle and/or an inner floor of the vehicle. Even if the total displacement of the vehicle, for example, in the vertical direction, is not very large, due to, for example, the weight of the vehicle, the acceleration can be very high. This means that personnel within the vehicle can suffer forces corresponding to accelerations in the order of many G, such as100-500 G, for short periods of time such as 10 ms.

To reduce acceleration of parts of the bottom plate and of the vehicle structure, the bottom plate can be further reinforced and/or the bottom plate and/or the entire vehicle can be made heavier, but this involves other substantial drawbacks, such as the need for more powerful motors, increased fuel consumption, and reduced mobility, especially in difficult terrain. Thus, in practice, substantial accelerations of the bottom plate or portions thereof, and substantial acceleration of the general vehicle structure connected to the bottom plate, cannot be avoided. The acceleration of the structure of an armored vehicle following the detonation of a mine or IED under the vehicle can cause injury or death to occupants in contact with the structure, and also accelerate objects in contact with the structure, such as lying on the floor of the structure, whereby these objects may impact against occupants at high speed, causing casualties.

For example, when personnel are seated within the vehicle, the detonation can cause acceleration of the seat, which can cause injuries, such as spinal injuries. To protect personnel from this kind of injuries, sophisticated and complex seat arrangements have been developed, designed to dampen the impact or acceleration that an explosion may induce on the body of the person in the seat.

US-2013/0214570-A1 discloses one example of a blast attenuation seat of this kind, which is wall or ceiling mounted and isolates the occupants of the vehicle from the chassis of the vehicle. This seat also includes optional foot supports, to isolate also the feet from the floor, thereby reducing the risk for damage to the feet, the lower parts of the legs and/or knees, due to acceleration of the floor caused by a detonation.

US-2011/0233975-A1 discloses another example of a shock absorbing mechanism with foot protection, including plastically deformable elastic members.

Actually, whereas many prior art documents focus on the design of the energy absorbing suspension of the seats, other documents focus on the protection of the feet. For example, DE-102004054962-A1 discloses a foot support for a vehicle, the foot support including a frame supported on the inner floor of the vehicle by means of compression springs and strings arranged to impede lateral displacement. Another embodiment is based on the use of tension springs by which the foot support can be supported from above. Another example of a protective foot support is disclosed in WO-2004/104511-A1.

Attention has also been paid to the protection of the feet of the driver: US-2010/0089197-A1 discloses a disconnected pedal unit in a mine-protected vehicle, including, for example, tension or compression springs.

However, the incorporation not only of special seats but also of additional foot supports implies not only additional costs, but also reduces the free floor space. The foot supports can represent obstacles when personnel have to move rapidly within the vehicle, for example, in order to rapidly exit the vehicle. Also, it may be tiring for the occupants of the vehicle to spend long time periods, such as several hours, with their feet placed on the foot supports. Also, during a mission situations may arise in which occupants of the vehicle have to displace themselves within the vehicle, with their feet on the inner floor. Thus, it is desirable to also provide some kind of damping device between inner floor and the part of the vehicle structure to which it is attached.

WO-2006/022814-A2 discloses a so-called suspended inner floor, namely, a floor plate supported on energy absorbing members secured to the bottom plate of a vehicle. The support members are said to be plastically deformable in a predetermined and predictable manner under the forces imposed by a land mine exploding under the vehicle. Additionally, the seats are provided with a further damping suspension system. Thus, it is understood that in the case of an explosion under the vehicle, the deformation of the bottom plate and the general acceleration to which it is subjected, will only be partially transferred to the inner floor, as part of the energy will be absorbed by the plastic deformation of the energy absorbing members. However, the system of energy absorbing members appears to be rather complex, and it appears to require a specifically designed structure between the inner floor and the bottom plate. On the other hand, although it has a damping effect, it has the drawback of introducing a mechanical connection between the bottom plate and the inner floor.

WO-2006/037314-A1 discloses a system in which an outer protective shield is separated from a vehicle bottom structure by energy absorbing elements. The arrangement appears to be generally complex and also includes a direct mechanical connection between the floor of the vehicle and the shield, over the damping elements.

EP-2671665-A1 relates to armored vehicles and focuses on the constitution of a double-walled bottom plate, above which an inner floor is placed, apparently supported on lateral portions of the bottom plate.

US-2014/0130658-A1 discloses a bottom shield of an armored vehicle, with different elastomeric isolators between the shield and the frame of a vehicle and between the shield and sidewalls. Cab mounts having elastomeric bodies are placed between the cab and vehicle frame members. The different collapsible components are arranged to collapse to predetermined extents. The arrangement appears to be generally complex and require a rather specific vehicle structure.

DE-10045685-A1 disclosed a bottom plate arranged under the bottom of a vehicle and separated from it by laterally arranged dampening elements, which will be compressed following an explosion under the vehicle.

GB-2500808-A discloses an inner floor placed above a bottom plate of an armored vehicle and supported on deformable components that act as damping elements, these deformable components being placed between the bottom plate and the inner floor. It is understood that care must be taken when designing the damping elements, to make sure that damping takes place to the necessary extent. Also, a further problem is that when a substantial deformation of the bottom plate is produced by an explosion and the bottom plate bulges inwards, pressure may increase substantially in the space between the bottom plate and the inner floor, and this pressure may contribute to a substantial acceleration of the inner floor, thus enhancing its damaging impact on the lower extremities of the occupants of the vehicle.

DE-10345914-A1 discloses an inner floor which in some embodiments is suspended from the walls of a container, some kind of blast absorbing structure being arranged below the inner floor. The arrangement appears to be rather complex, with a rather peculiar design, and it appears that an upward acceleration of the walls may be transmitted to the inner floor.

US-2002/0145308 discloses a system in which an additional foot floor is placed over the inner floor which in turn is substantially spaced above the vehicle's bottom plate or pan. This foot floor arranged over the vehicle inner floor is supported on air springs solely at its side ends. Away from the sides, flexible connecting elements are located between the vehicle inner floor and the foot floor, holding the foot floor in an equilibrium and balanced condition. Also here pressure can build up between the bottom plate and the vehicle floor as a result of the bottom plate being deformed by a blast, and the dampening means appear to be rather complex.

WO-2014/048420-A1 discloses deformation elements that can be used to support a footrest or an inner floor in an armored vehicle, from below. A problem with prior art devices is said to reside in the fact that they take up space and thus require the height of the vehicle to be increased. A deformation element is disclosed that apparently solves or reduces this problem. However, as in many other prior art cases, this element is still placed between the inner floor or footrest that it supports, and the floor below. Also, nothing is said about the pressure that may arise below the inner floor when deformation of the underlying bottom plate occurs due to an explosion.

EP-2180288-A2 discloses a more or less similar arrangement based on deformation elements under an inner floor or a footrest.

WO-2013/113786-A1 discloses an armored vehicle in which an inner floor is supported at a distance from a bottom plate or lower floor, using complex spacer elements. Apart from the general complex design of the spacer elements, including a sensor and actuator arrangement, it is understood that in the case of a mine blast, at least part of the spacer element will actually protrude above the surface of the inner floor, thereby representing a potential additional risk for undesired injuries.

US-2009/0145290-A1 likewise relates to protection against mine blasts. Here, the inner floor is not supported on the outer floor or bottom plate directly, that is, no deformable members are placed between the bottom plate and the inner floor. Instead, the inner floor is suspended from the ceiling. Thus, there is a free space between the bottom plate and the inner floor. However, as explained above, not only is the bottom plate deformed by the explosion so as to bulge inwards and thus approach the inner floor (as illustrated in US-2009/0145290-A1), but also the vehicle structure to which the bottom plate is attached, including chassis, side walls and ceiling, is accelerated. Thus, and in spite of the absence of any mechanical support structure between the bottom plate and the inner floor, the inner floor can suffer substantive acceleration due to the forces transmitted to it via side walls, ceiling and suspension. In order to avoid this, US-2009/0145290-A1 discloses prompt modification of the suspension of the inner floor to the ceiling in the case of an impact from below. An explosive charge is used to modify the suspension so as to allow the inner floor to drop a couple of centimeters. The disclosed system is complex and relies on explosive charges and sensors. A further problem is also that the acceleration of the inner floor will not only depend on its suspension to the roof; due to the deformation of the bottom plate, the air in the space between the bottom plate and the inner floor is compressed, and this pressure can further contribute to an acceleration of the inner floor upwards.

GB-2505317-A discloses another example of a floating inner floor or seat arrangement, suspended from above. A section with ridges or steps is provided, that deforms when the surrounding vehicle structure is accelerated upwards following a detonation below the vehicle. Due to this deformation, at least part of the impact is absorbed, and the acceleration of the parts that support the occupants of the vehicle is reduced. However, the disclosed arrangement requires a careful design of the floor structure as such, to make sure that the deformation will take place in the correct manner and to the necessary extent. Even minor errors in the complex construction may have serious consequences on the way in which the deformation will take place.

EP-2306139-A2 discloses an inner floor attached to a bottom plate of an armored vehicle and to its walls by a string based suspension system, including a string which links the bottom plate to the inner floor over a pulley which is fastened to the wall. The system appears to be based on the idea that a mine blast will cause the bottom plate to bulge upwards, whereby the inner floor will be lowered in relation to the wall. Thereby, the acceleration of the inner floor will be less than that of the wall. The arrangement appears to be rather complex and require careful design to make sure that it complies its objectives over a wide range of possible impacts.

EP-1293747-A2 discloses an inner floor that appears to be attached to the inner walls of the vehicle, and which can be adapted between a state in which it rests on the underlying floor, and a state, such as a tensioned state, in which it is spaced from the underlying floor. In some embodiments, the inner wall has a net-like structure, and illumination means are arranged below it and illuminate the space above the inner floor. However, although the arrangement may be advantageous in that it allows the space above the inner floor to be increased by lowering the inner floor when appropriate, the arrangement requires the presence of means for changing the inner floor between its lower and upper positions, increasing the complexity of the system. Also, the inner floor may not be very stable and it may tend to give away or move locally when a person is walking on it.

US-2014/0109757-A1 discloses a further example of an inner floor attached to the walls of an armored vehicle. The inner floor is based on a plurality of panels.

US-2014/0060304-A1 discloses an armored cab including, between inner floors and a bottom plate or wall, an undulating reinforcement plate and reinforcement beams to reduce upward displacement of the inner floors, so as to reduce upward displacement, velocity and acceleration on the occupants whose feet are supported on the inner floors.

US-2013/0264808-A1 discloses a system for supporting the axles of an armored vehicle, a support being arranged for deformation of connecting tabs without impacting of the support on the bottom of the vehicle body, following an explosion below the vehicle.

WO-2010/041086-A1 discloses a mine-resistant vehicle with a support frame and a crew carrying pod suspended from the support frame, to which it is rigidly connected.

EP-2000352-A1 discloses an energy absorbing device for a vehicle seat, comprising two plates and an energy absorbing mechanism extending between the two plates. The energy absorbing mechanism absorbs energy during compression. The device can be placed between a seat and a floor of a vehicle.

It is also known in the art to use springs for the purpose of reducing vibration felt by passengers in a compartment of a vehicle. For example, WO-02/26523-A1 discloses a system where compressed spring elements are used to push a floorboard upwards, whereas rubber isolators are used to isolate a cushion seat from a cantilevered seat assembly.

Thus, it has been considered that there is a need for a simple and reliable system for suspending an inner floor of an armored vehicle in relation to the vehicle structure (including, for example, a bottom plate, chassis, walls, and related beams), preferably using simple and reliable components. It is also considered that there is a need to provide for a stable inner floor that contributes to the reduction of the pressure that is built up under the inner floor following a detonation under the vehicle, due to the deformation of elements, such as a bottom plate, under the inner floor.

### DESCRIPTION OF THE INVENTION

A first aspect of the invention relates to an armored land vehicle comprising a vehicle structure and an inner floor, said inner floor comprising at least one floor panel suspended from said vehicle structure by a plurality of attachment or suspension devices. Each attachment or suspension device comprises at least one plastically deformable spring element, spring device or spring assembly, joining or connecting the floor panel to the vehicle structure. The spring element is pre-tensioned to pull the floor panel upwards so as to establish pressure against at least one stop part that prevents the floor panel from being pulled beyond a stop position; that is, the spring element is pre-tensioned to pull the floor panel upwards, and the stop part blocks this movement. Thus, the suspension devices are arranged for providing for energy dissipation and limitation or reduction of acceleration of the at least one floor panel following an explosion under the vehicle, by plastic deformation under elongation of the spring elements following the explosion, so as to reduce the risk for damage to the feet of occupants of the vehicle.

That is, contrarily to many other known floating inner floor arrangements, the present invention does not rely on the presence of damping springs or other damping elements, structures or devices placed between the inner floor and the bottom plate. Also, the inner floor suspension of the present invention does not rely on complex sensors or actuators arranged to release or break or alter the connection between the inner floor and the vehicle structure. Instead, the floor panel is suspended by spring elements that are plastically deformable and that are under tension, that is, that are pre-tensioned, pulling the floor panel or floor panels upwards, the movement upwards being blocked by stop parts against which the floor panel or associated elements are pressed with a predetermined force which depends on the extent to which the spring elements have been pre-tensioned.

Thus, applying a sufficient pre-tension to the spring elements, the force with which the floor panel or associated elements (such as the part of the suspension device that is connected to the floor panel) abut against the respective stop parts can be sufficient to prevent the floor panel from moving in the vertical direction during normal use, for example, when the occupants of the vehicle move within the vehicle, walking or stepping on the floor, or when the vehicle vibrates while being driven. This provides for stability and reduces the risk for occupants stumbling and similar undesired situations. The occupants will benefit from a feeling of walking on a stable floor and not on some kind of floating or swinging structure. Also, pre-tensioned spring elements that actually press the floor panel or associated elements against a stop part help to reduce the noise inside the vehicle when the vehicle is moving: the floor panel (or the relevant associated element) not merely abuts against the stop parts, but does so under pressure. On the other hand, the maximum stresses or G-forces that the occupants may be subjected to can be determined mechanically, by appropriate selection of the spring elements, namely, by choosing spring elements that will deform plastically when subjected to a predetermined load. Thus, the maximum acceleration to which the floor panel can be subjected can be determined by choosing the plastification load of the spring element or elements accordingly. By the correct choice or design of the spring elements, the maximum upward acceleration of the floor panel in the case of an explosion that accelerates the vehicle structure upwards can be reliably limited to, for example, 30G-40G. Thus, with this invention, the maximum acceleration can be determined by the choice of the plastically deformable spring elements, rather than by the use of complex sensors and actuators, or by relying on complex ad-hoc designs of the floor panels, or by relying on the expected relative movement between, for example, the bottom plate and the walls. The present invention provides for a simple and non-expensive suspension of floor panels, with high reliability, and that can easily be up- or downscaled and adapted to different vehicle designs.

The acceleration of the floor panel following an explosion (and as long as the floor panel does not impact against any element below it, for example, as long as it does not reach the bottom plate) will depend on the weight or mass of the floor panel (including any objects supported on it, such as one or more feet of occupants sitting on seats mounted to the wall of the vehicle and with their feet resting on the floor) and on the upwardly directed force exerted on the floor panel by the one or more spring elements. As the minimum weight of the floor panel is known (namely, the weight of the floor panel when nothing is supported on it), and as the maximum force that may accelerate the floor panel is the sum of the maximum plastification forces of the individual spring elements of the suspension devices used to connect the floor panel to the vehicle structure, the maximum acceleration can be calculated. Thus, the spring elements can be chosen or designed such as to provide for an acceleration that in a "worst scenario" case, such as a case in which only one foot is placed on the floor panel, the acceleration will not exceed a certain limit, namely, a limit low enough to bring the risk of injury down to a desired level.

Just as an example, one can take the case of a floor panel having a weight of 40 kg, and the assumption that one foot is placed on the floor panel, the foot having a weight of 7 kg. Thus, floor panel and foot together have a mass of 47 kg. If the floor panel is pulled upwards against the stop parts by four equal spring elements each having a maximum plastification force (that is, the maximum force exerted by the spring element during its extension after passing from the elastic to the plastic deformation stage) of 4 kN, the maximum force upwards will be 16 kN. If so, the maximum acceleration will be 16000/47 m/s², that is, 16000/47*9.81 G, that is, about 35 G, which is generally considered acceptable from a mine blast protection point of view. Thus, when choosing the plastically deformable spring element, attention has to be paid, on the one hand, to the maximum plastification force of the element (at least for the plastic deformation during the maximum extension likely to take place in the case of a mine blast, such as in the order of 5-20 cm). Another feature to consider is the energy that is dissipated during this extension, which should be sufficient to absorb the impact energy before the floor panel reaches the bottom plate or other structural elements placed below it. Thus, the maximum plastification force to be chosen should not be too low, but rather sufficiently high to allow for the required amount of energy to be absorbed during an extension which can typically be in the range of 5-20 cm, depending on the free space below the floor panel, that is, on the extent to which the floor panel can travel downwards before impacting against, for example, the floor plate or other rigid objects. On the other hand, it should not be too high, in order to keep the maximum possible acceleration of the floor panel under the selected upper limit. It may often be appropriate to choose the spring elements such that the maximum acceleration upwards of the floor panel (or floor panel with one foot placed on it, which can be considered a worst scenario case) will be in the range of 10-40 G, such as 20-40 G.

In some embodiments of the invention, each suspension device comprises a first part attached to the vehicle structure, such as to a wall or beam of the vehicle structure, and a second part attached to the floor panel, said first part and said second part being interconnected by said plastically deformable spring element. In some embodiments of the invention, the first part includes or is provided with screws or bolts for attaching the first part to, for example, a wall of the vehicle structure. The first part can, for example, comprise an appropriate shaped metallic element and can comprise a portion, such as a lower portion, making up or forming part of the stop part. The second part can be attached to the floor panel in any suitable manner. The second part can be fixed to the floor panel, for example, welded to it, or it can be attached to the floor panel in other ways, such as, for example, by passing through a through hole in the floor panel, such as in a frame of the floor panel. For example, the second part can support the floor panel from below so that the floor panel is resting on a portion of said second part.

In some embodiments of the invention, it is the floor panel itself that abuts against the stop part or stop parts, thereby preventing the floor panel from moving further upwards under the tension exerted by the pre-tensioned spring elements.

In some embodiments of the invention, the second part is attached or connected to the floor panel so that it can move horizontally in relation to said floor panel, preferably in a direction perpendicular to the wall to which the corresponding first part is attached. This arrangement can sometimes be preferred in order to accommodate for the displacement or pivotation of the walls outwards that often takes place following the detonation of a mine or IED under a vehicle. It can also facilitate installation by compensating for tolerances, for example, in the position of the bores in the walls to be used for attaching the suspension devices to the wall.

In some embodiments of the invention, the second part is arranged to extend through a slotted opening in the floor panel, so that said second part can move horizontally in the longitudinal direction of the slotted opening. In some embodiments of the invention, the second part includes a portion that extends through said slotted opening and that is moveable along said slotted opening, in the horizontal direction. Thus, if after an explosion the first part is displaced horizontally outwards following deformation of the bottom plate and displacement of the walls, the spring element can pull the second part horizontally, making it slide in said slotted opening towards the outermost end thereof.

In some embodiments of the invention, the first part comprises said stop part. That is, in some embodiments of the invention, the first part can include a portion or member arranged to protrude above the floor panel or above an element associated to the floor panel, so that the movement of the floor panel upwards, due to the pre-tension in the spring element, is blocked by said stop part. In other embodiments of the invention, the stop part does not form part of the first part; for example, the stop part can be an element attached to and/or extending from the wall, separate from said first part.

In some embodiments of the invention, the spring element is attached to a threaded element allowing for the regulation of the pre-tension in the spring element. For example, the threaded element can extend through the floor panel, and a nut or similar device can be threaded onto said threaded element and situated below the floor panel. Thus, by adjusting the position of the nut along the threaded element, such as a threaded pin, the pre-tension in the spring can be adjusted to the desired value.

In some embodiments of the invention, the plastically deformable spring element comprises a helical coil spring. In some embodiments of the invention, the plastically deformable spring element is a helical coil spring, such as a helical coil spring of steel, such as stainless steel, which can often be preferred due to the characteristics of such springs in what regards their stable maximum plastification force. Suitable helical coil springs which extend elastically when a force within a certain range is applied, and which deform plastically when the force exceeds a certain level, under a constant plastification force or with a plastification force that increases during the further extension of the spring, can be bought off the shelf, featuring maximum plastification forces of appropriate magnitudes. For many embodiments, maximum plastification forces in the order to 2-6 kN can be preferred, and corresponding coil springs are cheap and easy to obtain. In some embodiments of the invention, the plastically deformable element is a composite element comprising more than one element or part, for example, an elastic element in combination with a plastically deformable element. For example, a suitable composite plastically deformable spring element can comprise a helical coil spring in combination with a plastically deformable rod, such as a tubular rod provided with cuts that allow the rod to extend by being plastically deformed when an applied force exceeds a certain threshold. Thus, the term "elastically deformable spring element" should not be interpreted narrowly. What is required is that the element features an elastic behavior such that it can be pre-tensioned to pull the floor panel or associated element against the stop part or stop parts, and a plastic behavior such that it deforms plastically following an impact, allowing the floor panel to move vertically in the downwards direction in relation to the vehicle structure, keeping its acceleration within appropriate limits and absorbing the required amount of energy.

Due to the pre-tension, with time the spring will suffer creep and readjustment of the springs (such as by adjusting the pre-tension) or even replacement of the springs may be necessary at certain intervals. However, suitable springs can resist for years, and as the invention can be implemented using non-expensive commercially available springs, a replacement of the springs after a couple of years is not a costly issue.

In some embodiments of the invention, the spring element is arranged to allow for an elongation thereof by at least 50mm, preferably at least 60 mm, more preferably at least 80 mm and even more preferably at least 100 mm, between the initial state of the spring element prior to an explosion and the plastically deformed state of the spring element after an explosion. As explained above, the vehicle structure can be subjected to very substantial accelerations upwards when subjected to the impact of the detonation of a mine or IED from below. For example, velocities in the order of 7-8 m/s can be reached within timeframes of a few milliseconds, with peak accelerations above 100 G, such as 200-400 G. This is far more than the lower legs of a person can resist; a reduction by a factor of about 10 or more is needed. It has been found that this can often be achieved with this kind of plastic deformation involving elongations in the order of 50 mm or more. The use of pre-tensioned spring elements, comprising or consisting of springs or spring-like members or combinations of plastically and elastically deformable parts, with known plastic and elastic properties, makes it possible to easily tailor a reliable system so as to make sure that the floor will be stable during normal conditions (so that occupants can move on the floor without feeling that it is giving away), while guaranteeing that the springs will give away under plastic deformation when subjected to loads exceeding a certain level. The maximum elongation which together with the plastic deformation force determines the maximum plastic energy that will be dissipated during the elongation, can be chosen to minimize the risk of the floor panel impacting against the bottom plate.

In some embodiments of the invention, said floor panel is suspended by at least four suspension devices. This provides for a simple and balanced layout and simple installation. For example, the four corners of a substantially rectangular floor panel can be connected to the wall of the vehicle structure by means of the four suspension devices.

In some embodiments of the invention, said at least one floor panel has a surface having a surface area, and the floor panel is provided with a plurality of perforations to allow air to pass from a space below the floor panel to a space above the floor panel as a result of a pressure increase below the floor panel, said perforations occupying a portion of said surface area, said portion being at least 25% of the surface area. The substantial extent of the surface occupied by the perforations in relation to the total surface of the floor panel provides two advantages: first of all, the venting can be substantial, that is, the pressure increase below the floor panel is reduced due to the rapid flow of air through the perforations, when pressure starts to increase. Secondly, the effective area of the floor panel on which the pressure from below is exerted is substantially reduced due to the perforations. Thus, the lift force acting on the floor panel due to the pressure difference between the bottom and top sides of the floor panel is substantially reduced, thereby reducing the contribution to the acceleration upwards of the floor panel. In many armored vehicles, the floor panels extend over the entire payload area of the crew compartment, or over a substantial part thereof, wherefore it is advantageous to allow for the air to pass through said floor panels. The floor panel can, for example, be a metal floor panel.

In some embodiments of the invention, said portion is at least 33% of the surface area. Such a substantial presence of perforations can serve to substantially reduce the contribution from the deformation of the bottom plate to a pressure increase below the floor panel, and further reduces the area on which such a pressure is exerted. In some embodiments of the invention, the portion can make up at least 50% or 60% of the surface area.

In some embodiments of the invention, said panel comprises at least two layers placed one on top of the other. On the one hand, it can often be preferred to provide floor panels having a substantial thickness, for example, to provide for rigidity and stability, and also to reduce acceleration. However, carrying out multiple perforations in thick metal panels can be an expensive and time-consuming task. Thus, it can often be more practical to provide thinner panels which can then be joined to each other, preferably with the perforations approximately facing each other, to constitute the floor panel. For example, two, three or more layers or subpanels, each with the desired perforations, can be joined together to build up a sufficiently stiff floor panel. Also, the use of multiple layers, such as two or more layers can be appropriate for enhancing rigidity without excessively increasing the weight of the floor panel.

In some embodiments of the invention, at least two of said at least two layers are placed on top of each other with a spacing between said two layers. This kind of spacing can serve to further enhance rigidity without increasing weight, that is, it provides for a good stiffness to weight ratio.

In some embodiments of the invention, the layers are welded to each other at a plurality of points distributed over the surface area. By welding them to each other, for example, at some specific points, they can be prevented from moving in relation to each other. This can serve to provide for an adequate stiffness of the assembly. In some embodiments of the invention, inserts such as metal inserts are placed in selected perforations of the layers and optionally welded to the layers. In some embodiments of the inventions, the inserts can have an upper portion and a lower portion arranged to fit into respective perforations of an upper and a lower layer, and an intermediate portion arranged to provide for a separation between the upper and lower layer, for example, by having a size in the horizontal direction larger than the diameter of the perforations.

In some embodiments of the invention, the inner floor comprises a plurality of the floor panels, at least one of the floor panels being spaced from an adjacent one of said floor panels by a distance of between 2cm and 6 cm. This spacing between floor panels can be used as an alternative to or in combination with the perforations described above, to allow air to pass from below the inner floor to above the inner floor, thereby preventing or reducing the build-up of pressure under the inner floor following an explosion under the vehicle. A too small spacing may not allow sufficient air to pass, and a too large spacing may increase the risk that occupants will accidentally step into the spacing and suffer injuries. Spacings in the order of 2-6 cm have been considered to be preferable.

In some embodiments of the invention, the inner floor can have a cover placed on at least one floor panel and/or extending over several floor panels, optionally over a spacing between the floor panels if such a spacing is present. Said cover can be placed or arranged so that it will be at least partly removed by air streaming upwards from a space below said floor panel, following an explosion below the vehicle. For example, the cover or mat can be of a flexible and/or elastic material such as a synthetic or polymer material such as natural or synthetic rubber or similar, so that it can bend away from the upper surface of the floor panel when air passes through perforations and/or through a spacing between the floor panels, following an explosion under the vehicle. In some embodiments of the invention, the mat can comprise multiple parts that are fitted to each other along their adjacent edges, for example, in a jig-saw-puzzle manner, for example, by means of a dove-tail configuration of the edges or similar. In some embodiments of the invention, the parts have sides having lengths in the range of 15-40 cm, for example, the parts can have a substantially rectangular or square configuration with sides longer or equal to 15 cm but shorter than 40 cm, for example, in the range of 20-30 cm. Thus, the air flow following a blast can break up the mat. The flexible and/or elastic character of the mat, and/or the character of the material chosen for the mat, can be selected to reduce the risk for damage or injury caused by the movement of the mat or parts thereof following an explosion under the vehicle. The mat can be useful to prevent small objects, such as dirt, from falling through said perforations and/or space between the panels, into the space below the floor panels. In some embodiments of the invention, the cover or mat has a thickness in the range of 3-15 mm, such as in the range of 5-10 mm.

In some embodiments of the invention, the inner floor comprises a plurality of the floor panels, such as three or more of the floor panels, each floor panel having a width of between 0.5m and 1.0m, preferably between 0.6m and 0.8m. To facilitate installation of the floor panels and to facilitate the introduction of the floor panels into the vehicle, it is preferred that the floor panels are not too large, as this can render handling of them difficult. On the other hand, the use of very narrow floor panels is also inappropriate, as it requires the installation of many floor panels and as the weight of each floor panel may be excessively small (thereby increasing acceleration upwards following an explosion) or, alternatively, if the floor panels are made heavier to compensate for the reduced width, the total weight of the inner floor may become unnecessarily high. Thus, it has been found that a suitable compromise may be reached using wall panels having a width within the ranges indicated above.

The different embodiments of the invention described above can be combined, that is, the suspension devices described above can be used in combination with the perforated floor panels and/or in combination with the described spacing between floor panels, and the floor panels can be both perforated and spaced from each other. Thus, it is possible to combine the different embodiments of the invention to optimize the protection of the crew against explosions under the vehicle.

A further aspect of the invention relates to the use of the inner floor in the armored land vehicle according to the first aspect of the invention, for reducing the risk for damage to the feet of occupants of the vehicle in the case of an explosion under the vehicle.

### BRIEF DESCRIPTION OF THE DRAWINGS

To complete the description and in order to provide for a better understanding of the invention, a set of drawings is provided. Said drawings form an integral part of the description and illustrate possible embodiments of the invention, which should not be interpreted as restricting the scope of the invention, but just as examples of how the invention can be carried out. The drawings comprise the following figures:
Figure 1 is a schematic cross sectional side view of a portion of an armored vehicle according to an embodiment of the invention.
Figure 2 is schematic perspective view of a portion of the armored vehicle in accordance with this embodiment of the invention, with an enlarged view of the encircled area.
Figure 3 is a schematic view of a portion of this embodiment of the invention, showing details of the attachment between floor panel and wall.
Figure 4 is a schematic view of an edge portion of the floor panel.
Figure 5 is an exploded view of an attachment or suspension device for connecting the floor panel to the wall in accordance with this embodiment of the invention.
Figure 6A and 6B are a cross sectional view and a top view, respectively, of a portion of a floor panel, showing how it comprises two layers welded to each other using inserts.
Figure 7 shows a mat applied on a vehicle floor in accordance with a possible embodiment of the invention.
Figures 8A and 8B are diagrams showing the relation between the force that the spring element exerts on the floor panel as a function of the axial elongation of the spring element from its original position, for two different kinds of spring elements.
Figures 9A-9C are schematic cross sectional views of the vehicle during three different moments: before, at and after an explosion under the vehicle.

### DESCRIPTION OF A WAY OF CARRYING OUT THE INVENTION

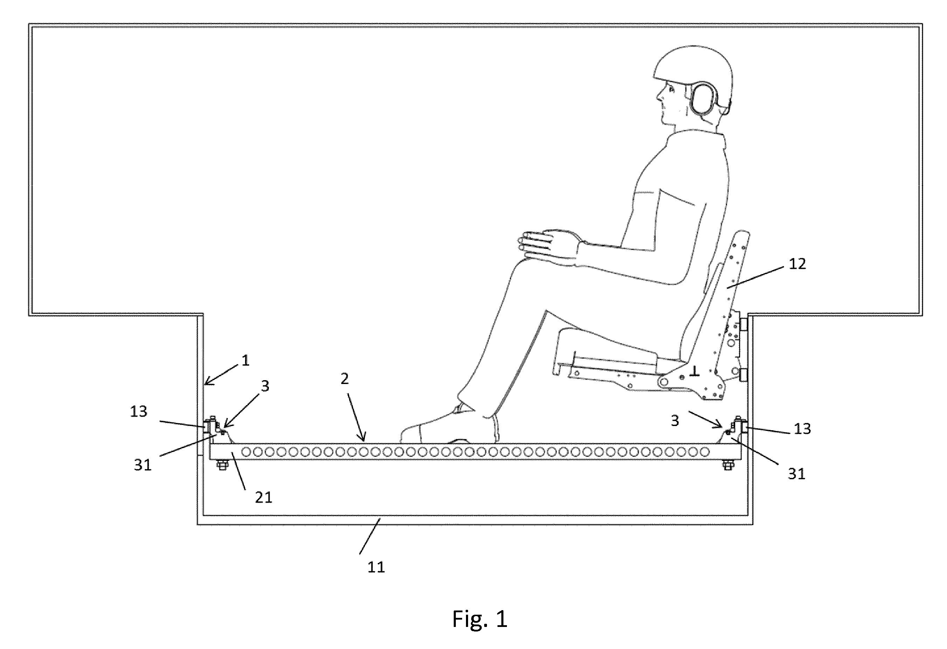

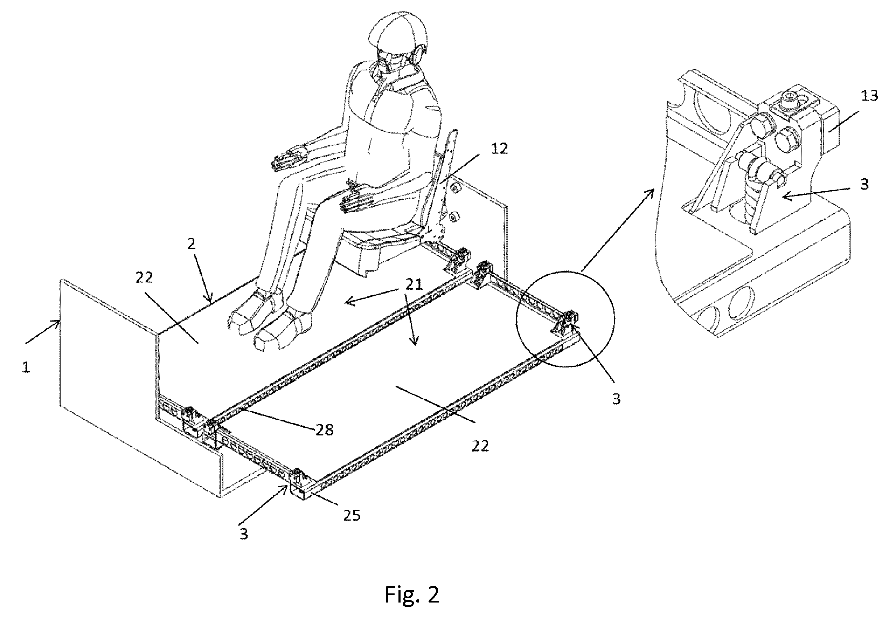

Figures 1 and 2 illustrate part of an armored vehicle in accordance with an embodiment of the invention, comprising a vehicle structure 1 including wall and ceiling, and a bottom plate 11 attached to the vehicle structure 1. The vehicle includes a plurality of seats for occupants of the vehicle, one such seat 12 being shown in the figures. The seat can be a conventional blast-protected seat connected to the wall of the vehicle structure and arranged so that is can move vertically relative to the wall when the vehicle structure 1 is displaced upwards following an explosion under the vehicle, thereby reducing the risk for injury, such as spinal injury, of the person sitting in the seat. Thus, the seat can move with a certain stroke in the vertical direction, in relation to the wall to which the seat is attached. Only one seat has been illustrated, but in many embodiments of the invention there are two seats facing each other.

The vehicle further comprises an inner floor 2, separated from the bottom plate 11. In some embodiments of the invention, the separation can be by a distance in the order of 10-30 cm. The inner floor 2 comprises a plurality of floor panels 21, each floor panel being connected to the wall of the vehicle structure 1 by means of four attachment or suspension devices 3, one suspension device 3 being arranged at each corner of the floor panel 21. This provides for balance and an appropriate distribution of forces. The way in which the suspension devices 3 are distributed can be observed in figure 2.

Figure 2 also shows how, in this embodiment of the invention, the suspension devices can be fixed to the wall by attaching them to some kind of support element or block 13, the block 13 being attached to the wall by, for example, welding. In other embodiments of the invention, the suspension devices 3 can be directly screwed to the wall, or attached to the wall in other ways, such as by some kind of hook arrangement or similar.

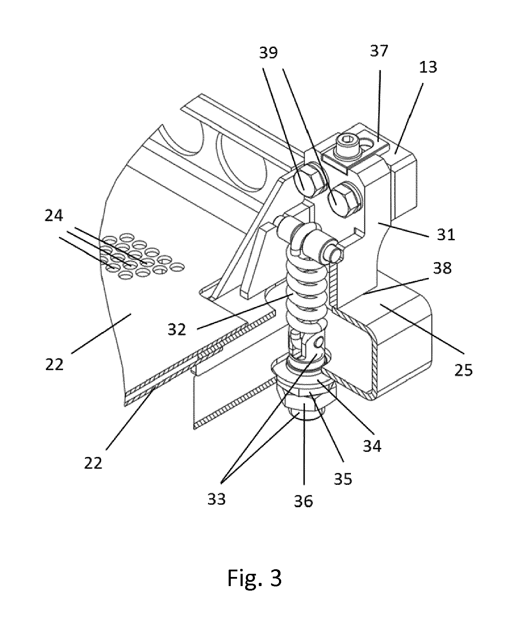

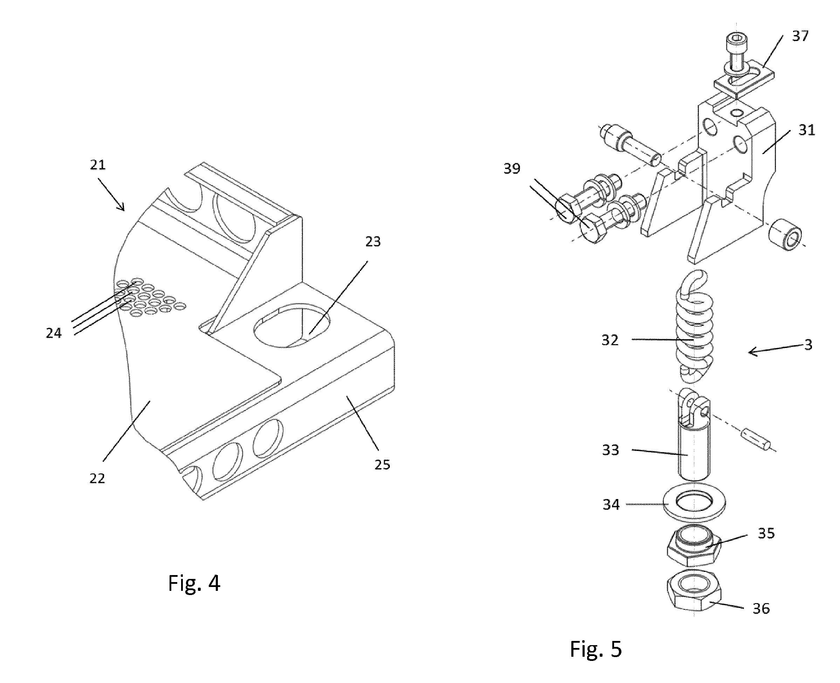

The details of a suspension device 3 can be observed in figures 3 and 5. The suspension device comprises a first part 31 arranged to be fixed to the wall (for example, to the block 13 or other member welded to the wall, or directly to the wall) by screws or bolts 39, and a second part 33 which is connected to the floor panel 21, extending through a slotted opening 23 in the floor panel (the slotted opening 23 or through hole is best shown in figure 4). In the illustrated embodiment, the first part 31 is an appropriately shaped metal block, with through holes for accommodating screws or bolts.

The second part 33 is an elongated member or pin, which can extend through said opening 23. The floor panel rests on a washer 34 surrounding the elongated member, and the washer rests on a nut 35 which is screwed onto an external threaded portion of the elongated member. In this embodiment of the invention, the first part 31 and the second part 33 are connected to each other by means of the helical coil spring 32 as shown in figure 5.

In figure 3, the arrangement is shown with the helical coil spring 32 pre-tensioned; this has been achieved by screwing the nut 35 upwards along the elongated member 33, thereby pressing the washer 34 upwards. The floor panel comprises a frame 25 and two layers 22 attached to the frame. The frame is pressed against a portion or stop part 38 of the first part 31, as shown in figure 3. When the nut 35 is screwed to displace the washer 34 upwards, the tension in the helical coil spring 32 increases, increasing the pressure with which the frame 25 of the floor panel 21 is pressed onto a stop portion or stop part 38 of the first part 31. Thus, by means of the nut 35, a selected pre-tension can be established in the helical coil spring. A second nut 36 can then be screwed until it abuts against the first nut from below, to make sure that the first nut remains in the selected axial position along the elongated member, that is, so that the first nut will not move downwards, for example, during use of the vehicle.

The same process can be carried out in relation to the other three suspension devices, prior to installing the floor panel into the vehicle. Once the right pre-tension in the four helical coil springs has been established, the floor panel can be installed, simply bolting the first part 31 of each suspension device to the respective block 13. The first part 31 can be provided with some kind of protruding portion, such as a projecting element 37 screwed onto the top of the first part, that makes it possible to support the first part on the block 13 prior to attaching it to the block with bolts 39.

As shown in figure 3, the floor panel 21 comprises, in this embodiment of the invention, two subpanels or layers 22, which are attached to the frame 25 and spaced from each other, to enhance rigidity without increasing weight. Each layer 22 is provided with a plurality of perforations, so that air can pass through said perforations when the bottom plate 11 is deformed following an explosion under the vehicle. In addition to (or as an alternative to) said perforations, in some embodiments of the invention the floor panels 21 can be spaced from each other as shown in figure 2, for example, by a spacing 28 having a width of 2-6 cm, so that air can flow upwards through the space between said floor panels, following an explosion under the vehicle.

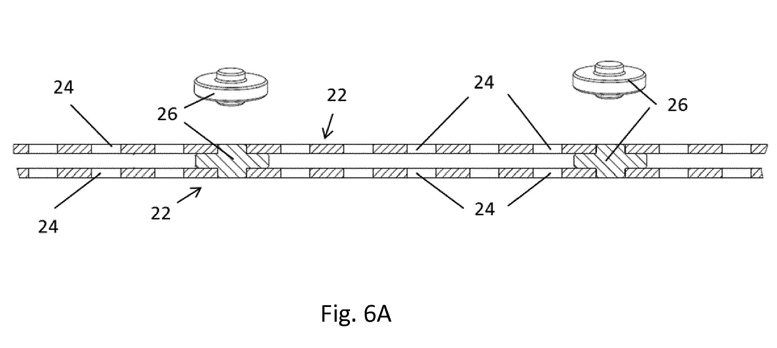

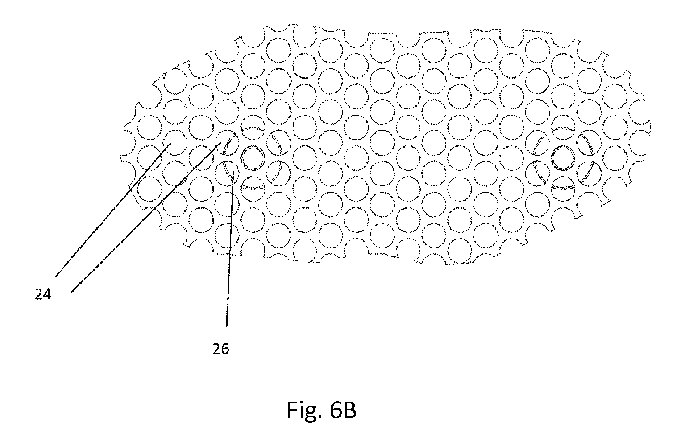

The two layers are welded to each other at a plurality of points, using inserts 26 as schematically shown in figures 6A and 6B. Each insert 26 comprises an upper and a lower cylindrical portion fitting snuggly into respective perforations 24 in the respective layers, and a larger central portion, which helps to maintain the correct spacing between the two layers. By establishing this kind of connection at a plurality of points distributed throughout the floor panel 21, a stiff floor panel can be obtained in a simple manner, without excessive use of material and without excessively contributing to the weight of the vehicle. Very heavy floor panels can also be more difficult to manipulate during, for instance, installation of the floor panels. Thus, this solution is efficient.

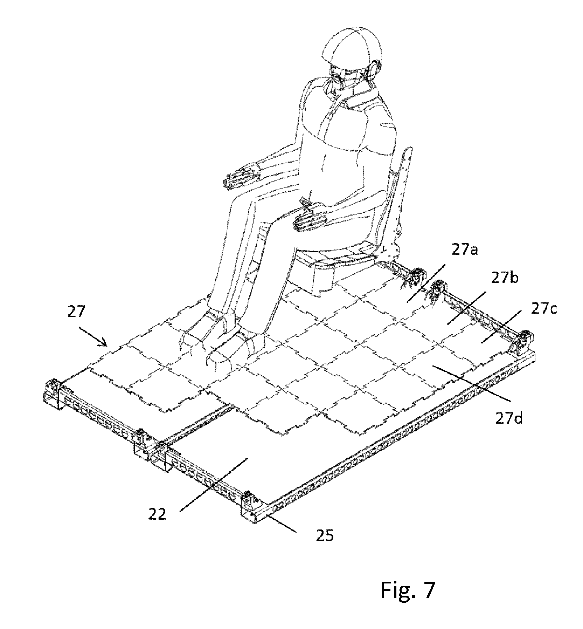

A mat 27 can be placed on the floor panels as shown in figure 7 and comprise a plurality of parts 27a-27d which engage with each other at their edges, but which can fly apart when air pressure builds up under the floor panel, thereby allowing air to pass through the perforations. The mat can be useful to prevent dirt and small objects from falling through the perforations and accumulating in the space between the inner floor and the bottom plate. The mat can also be applied to cover a space 28 between adjacent floor panels. The material of the mat can be chosen to reduce the risk of injury when the mat is separated from the floor panel following an explosion under the vehicle; for example, a light-weight and flexible material can be preferred. The mat can have a thickness in the order of some mm, such as in the range of 3-15 mm, such as in the range of 5-10 mm. In the illustrated embodiment the parts 27a-27d of the mat engage with each other due to a dove-tail configuration of the edges. In some embodiments a more rounded configuration can be preferred, to even further reduce the risk of injuries when the parts are separated from each other following an explosion under the vehicle.

In figure 4 it can be observed how the hole 23 is slotted so that it is elongated in the direction perpendicular to the wall to which the suspension device is attached. This allows for a certain possibility of movement between the second part 33 of the suspension device 3 and the floor panel 21, which can facilitate installation and, maybe most importantly, serve to compensate for the outward movement of the walls of the vehicle that often takes place following an explosion under the vehicle.

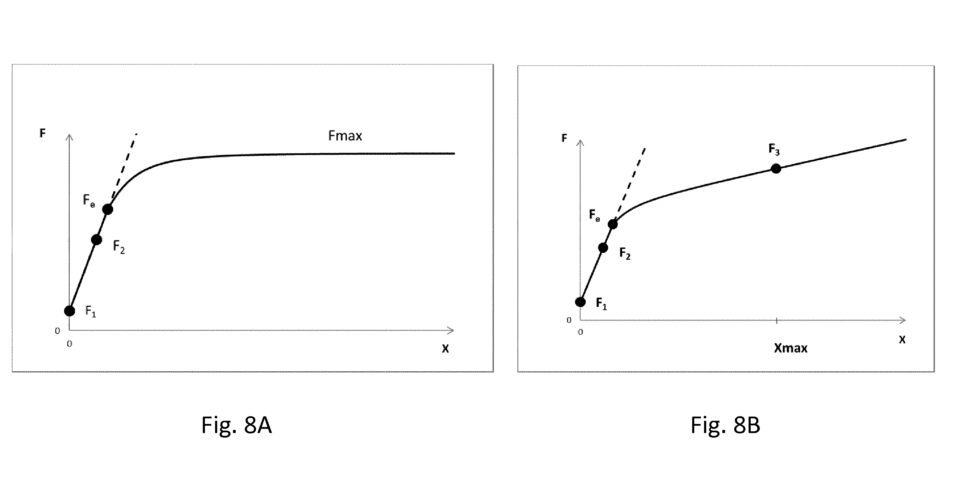

Figures 8A and 8B are a diagrams showing the relation between the force ("F", on the vertical axis) that the spring element exerts on the floor panel as a function of the axial elongation ("x", on the horizontal axis) of the spring element from its original or neutral state, that is, from its unloaded state. In the case of figures 8A and 8B, a spring is used that requires a minimum force F₁ in the axial direction in order to initiate a separation of the coils, that is, to initiate elongation of the spring in the axial direction. By screwing the nut 35 to move it and the washer 34 upwards along the elongated member, an increased axial force is applied to the spring, and when a threshold force F₁ is reached, the coils begin to separate and the elongation of the spring 32 increases in the axial direction. When the nut 35 is screwed further upwards, the force increases and the spring is further elongated in the axial direction. That is, the tension or pre-tension in the spring is increased, and the floor panel 21 or rather the frame 25 thereof is pressed harder against the stop part 38 of the first part. This elongation is elastic, and if the nut is screwed in the other direction, the spring can return to its original state. Until the maximum force Fₑ in the elastic range is reached, the response is substantially linear, as suggested by the broken line in figures 8A and 8B.

It can often be preferred to pre-tension the spring 32 until reaching a force F₂ in the order of 60%-90%, such as 70%-80%, of the maximum force Fₑ in the elastic range, that is, the force at which plastic deformation starts to take place. In this way, a sufficiently high force is applied in order to give rise to a substantial energy absorption already from the beginning of the relative displacement between the floor panel and the wall following an impact, while the risk for early plastic deformation is limited. A high initial force is also useful to prevent the floor panel from moving when people are walking on it and to reduce noise due to vibrations when the vehicle is moving. Now, when the vehicle structure is displaced upwards following an explosion under the vehicle, the wall will be displaced in relation to the floor panel, and the first part 31 and the second part 33 will be forced apart. The spring is thereby further elongated, and plastic deformation takes place.

In some embodiments of the invention, a spring element with a maximum plastification force is used. In these embodiments, the force can reach a maximum plastification load Fₘₐₓ, but it cannot increase any further, due to the characteristics of the spring. Thus, the acceleration of the floor panel cannot exceed the limit determined by the weight thereof and by Fₘₐₓ.

Figure 8A illustrates such a case, that is, the case when a spring element is used featuring a well-defined maximum plastification load Fₘₐₓ, which is constant for a substantial elongation range. This kind of behavior is featured by, for example, many stainless steel springs.

In some embodiments of the invention, the spring elements do not feature a well-defined maximum plastification load, but a plastification load that increases with the elongation of the spring element. Such a case is shown in Figure 8B. However, assuming a maximum relative displacement xₘₐₓ between the floor panel 21 and the wall of the vehicle structure following a mine blast, a maximum force F₃ can be assumed, from which the maximum acceleration in a worst case scenario can be calculated.

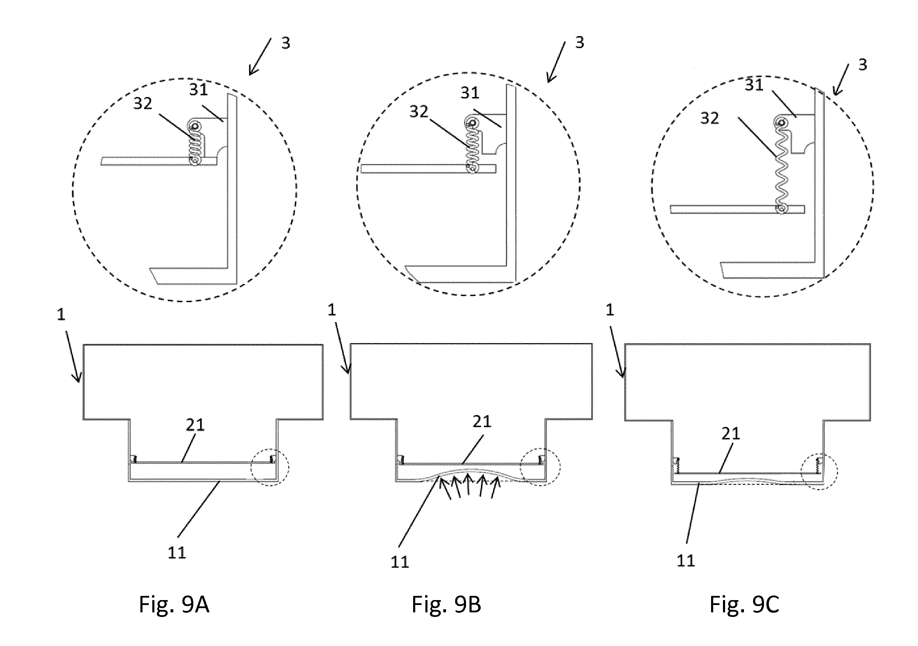

Figures 9A-9C schematically illustrate what happens at an explosion under the vehicle. In figure 9A, the floor panels 21 are suspended to the walls of the vehicle structure 1 as explained above. When an explosion takes place, the bottom plate 11 bulges inwards, whereby pressure builds up under the floor panels 21, although this pressure build-up is mitigated by the fact that air can pass through the perforations 24 in the floor panels and/or through the spacing between floor panels. On the other hand, the force applied to the bottom plate 11 from below is transferred to the vehicle structure 1, so that the vehicle walls and the ceiling are accelerated upwards.

As the floor panel is not fixed to the vehicle structure but elastically attached to it, and due to the inertia of the floor panel (due to its own mass and due to any mass placed thereon, such as one or more feet), the floor panel does not move upwards with the same velocity nor acceleration as the walls, and is thus vertically displaced downwards in relation to the walls. The springs 32 are thus extended and the forces exerted by them increases, until reaching the plastic deformation phase, where plastic deformation takes place and the maximum plastification force Fₘₐₓ is reached. This is schematically illustrated in figure 9B. After the explosion, the spring elements remain plastically deformed, as schematically illustrated in figure 9C. However, the accelerations suffered by the feet of the occupants of the crew compartment have been kept within the predetermined level, namely, under the maximum level determined by the weight of the floor panel and objects resting thereon, and the maximum plastification force Fₘₐₓ of the springs.

In this text, the term "comprises" and its derivations (such as "comprising", etc.) should not be understood in an excluding sense, that is, these terms should not be interpreted as excluding the possibility that what is described and defined may include further elements, steps, etc.

The ranges indicated in the present specification include their endpoints, unless otherwise specified.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims. For example, the spring elements do not necessarily consist in or comprise simple coil springs, more than one occupant can be seated in correspondence with each floor panel, etc.

## Claims

1. An armored land vehicle, comprising a vehicle structure (1) and an inner floor (2), the inner floor (2) comprising at least one floor panel (21) suspended from the vehicle structure by a plurality of suspension devices (3), each suspension device (3) comprising a plastically deformable spring element (32) joining the floor panel (21) to the vehicle structure (1),
**characterized in that**
the spring element (32) is pre-tensioned to pull the floor panel upwards so as to establish pressure against at least one stop part (38) that prevents the floor panel from being pulled beyond a stop position;
**in that** the suspension devices (3) are arranged for providing for energy dissipation and limitation of acceleration of the at least one floor panel (21) following an explosion under the vehicle, by plastic deformation under elongation of the spring elements following the explosion, so as to reduce the risk for damage to the feet of occupants of the vehicle;
and **in that** the pre-tension of the spring elements is sufficient to prevent the floor panel from moving in the vertical direction during normal use.

2. The armored land vehicle according to claim 1, wherein each suspension device (3) comprises
a first part (31) attached to the vehicle structure
and a second part (33) attached to the floor panel (21),
the first part (31) and the second part (33) being interconnected by the spring element (32).

3. The armored land vehicle according to claim 2, wherein the second part (33) is attached to the floor panel (21) so that the second part (33) can move horizontally in relation to the floor panel (21).

4. The armored land vehicle according to claim 3, wherein the second part (33) is arranged to extend through a slotted opening (23) in the floor panel (21), so that the second part (33) can move horizontally in the longitudinal direction of the slotted opening (23).

5. The armored land vehicle according to any of claims 2-4, wherein the first part (31) comprises said stop part (38).

6. The armored land vehicle according to any of the preceding claims, wherein the spring element (32) is attached to a threaded element allowing for the regulation of the pre-tension in the spring element (32).

7. The armored land vehicle according to any of the preceding claims, wherein the spring element (32) comprises a helical coil spring.

8. The armored land vehicle according to any of the preceding claims, wherein the spring element is arranged to allow for an elongation thereof by at least 50mm, preferably at least 60 mm, more preferably at least 80 mm and even more preferably at least 100 mm, between the initial state of the spring element prior to an explosion and the plastically deformed state of the spring element after an explosion.

9. The armored land vehicle according to any of the preceding claims, wherein the floor panel (21) is suspended by at least four suspension devices (3).

10. The armored land vehicle according to any of the preceding claims, said at least one floor panel having a surface having a surface area, said floor panel being provided with a plurality of perforations (24) to allow air to pass from a space below the floor panel to a space above the floor panel as a result of a pressure increase below the floor panel, said perforations (24) occupying a portion of said surface area, said portion being at least 25% of the surface area, preferably at least 33% of the surface area.

11. The armored land vehicle according to claim 10, wherein the floor panel (21) comprises at least two layers (22) placed one on top of the other.

12. The armored land vehicle according to claim 11, wherein at least two of said at least two layers (22) are placed on top of each other with a spacing between said two layers (22).

13. The armored land vehicle according to claim 11 or 12, wherein said layers (22) are welded to each other at a plurality of points distributed over the surface area.

14. The armored land vehicle according to any of the preceding claims, wherein said inner floor comprises a plurality of the floor panels (21), at least one of said floor panels (21) being spaced (28) from an adjacent one of said floor panels (21) by a distance of between 2 cm and 6 cm.

15. The armored land vehicle according to any of claims 10-14, further comprising an inner floor cover (27; 27a-27d) placed on at least one floor panel, said inner floor cover being arranged so that it will be at least partly removed by air streaming upwards from a space below said floor panels, following an explosion below the vehicle.

16. The armored land vehicle according to any of the preceding claims, the inner floor comprising a plurality of said floor panels, such as three or more of said floor panels, each floor panel having a width of between 0.5m and 1.0m, preferably between 0.6m and 0.8m.

17. Use of the inner floor in the armored land vehicle according to any of the preceding claims, for reducing the risk for damage to the feet of occupants of the vehicle in the case of an explosion under the vehicle.

## Patentansprüche

1. Gepanzertes Landfahrzeug, umfassend eine Fahrzeugstruktur (1) und einen inneren Boden (2), wobei der innere Boden (2) mindestens eine Bodenplatte (21) aufweist, welche an der Fahrzeugstruktur mittels einer Vielzahl von Aufhängevorrichtungen (3) aufgehängt sind, wobei jede Aufhängevorrichtung (3) ein plastisch verformbares Federelement (32) umfasst, welches die Bodenplatte (21) mit der Fahrzeugstruktur (1) verbindet,
**dadurch gekennzeichnet, dass**
das Federelement (32) vorgespannt ist, die Bodenplatte nach oben zu ziehen, um Druck gegen mindestens ein Anschlagteil (38) zu bewirken, welches verhindert, dass die Bodenplatte über eine Stoppposition gezogen wird;
die Aufhängevorrichtungen (3) ausgebildet sind zum Bereitstellen einer Energieableitung und Begrenzung der Beschleunigung der mindestens einen Bodenplatte (21) nach einer Explosion unter dem Fahrzeug, durch plastische Verformung unter Dehnung der Federelemente nach der Explosion, um das Risiko für Schäden an den Füßen der Insassen des Fahrzeugs zu reduzieren;
und die Vorspannung 'der Federelemente ausreicht, um zu verhindern, dass sich die Bodenplatte während des normalen Gebrauchs in der vertikalen Richtung bewegt.

2. Gepanzertes Landfahrzeug nach Anspruch 1, wobei jede Aufhängevorrichtung (3) aufweist,
ein an der Fahrzeugstruktur befestigtes erstes Teil (31) und ein an der Bodenplatte (21) befestigtes zweites Teil (33), wobei das erste Teil (31) und das zweite Teil (33) durch das Federelement (32) miteinander verbunden sind.

3. Gepanzertes Landfahrzeug nach Anspruch 2, wobei das zweite Teil (33) an der Bodenplatte (21) derart befestigt ist, dass sich das zweite Teil (33) horizontal in Bezug auf die Bodenplatte (21) bewegen kann.

4. Gepanzertes Landfahrzeug nach Anspruch 3, wobei das zweite Teil (33) ausgebildet ist, sich durch eine schlitzförmige Öffnung (23) in der Bodenplatte (21) zu erstrecken, so dass sich das zweite Teil (33) horizontal in Längsrichtung der Schlitzöffnung (23) bewegen kann.

5. Gepanzertes Landfahrzeug nach einem der Ansprüche 2-4, wobei das erste Teil (31) das Anschlagteil (38) umfasst.

6. Gepanzertes Landfahrzeug nach einem der vorhergehenden Ansprüche, wobei das Federelement (32) an einem Gewindeelement befestigt ist, um die Einstellung der Vorspannung in dem Federelement (32) zu ermöglichten.

7. Gepanzertes Landfahrzeug nach einem der vorhergehenden Ansprüche, wobei das Federelement (32) eine Schraubenfeder umfässt.

8. Gepanzertes Landfahrzeug nach einem der vorhergehenden Ansprüche, wobei das Federelement ausgebildet ist, eine Dehnung zwischen dem Anfangszustand des Federelements von einer Explosion und dem plastisch verformten Zustand des Federelements nach einer Explosion von mindestens 50 mm, vorzugsweise mindestens 60 mm, mehr bevorzugt mindestens 80 mm und noch mehr bevorzugt mindestens 100 mm zu ermöglichen.

9. Gepanzertes Landfahrzeug nach einem der vorhergehenden Ansprüche, wobei die Bodenplatte (21) durch mindestens vier Aufhängevorrichtungen (3) aufgehängt ist.

10. Gepanzertes Landfahrzeug nach einem der vorhergehenden Ansprüche, wobei die mindestens eine Bodenplatte eine Oberfläche mit einem Oberflächebereich aufweist, wobei die Bodenplatte mit einer Vielzahl von Perforationen (24) versehen ist, damit Luft als Folge einer Druckerhöhung unter der Bodenplatte von einem Raum unterhalb der Bodenplatte in einen Raum oberhalb der Bodenplatte fließen kann, wobei die Perforationen (24) einen Teil des Oberflächenbereichs einnimmt, wobei der Teil mindestens 25% des Oberflächenbereichs, vorzugsweise mindestens 33% des Oberflächenbereichs beträgt.

11. Gepanzertes Landfahrzeug nach Anspruch 10, wobei die Bodenplatte (21) mindestens zwei Schichten (22) umfasst, von denen eine über der anderen angeordnet ist.

12. Gepanzertes Fahrzeug Land nach Anspruch 11, wobei zumindest zwei der mindestens zwei Schichten (22) übereinander mit einem Abstand zwischen den zwei Schichten (22) angeordnet sind.

13. Gepanzertes Landfahrzeug gemäß Anspruch 11 oder 12, wobei die Schichten (22) über den Oberflächenbereich verteilt an einer Vielzahl von Punkten miteinander verschweißt sind.

14. Gepanzertes Landfahrzeug nach einem der vorhergehenden Ansprüche, wobei der innere Boden eine Vielzahl an Bodenplatten (21) umfasst, wobei mindestens eine der Bodenplatten (21) von einer benachbarten der Bodenplatten (21) um einen Abstand zwischen 2 cm und 6 cm beabstanden (28) ist.

15. Gepanzertes Landfahrzeug nach einem der Ansprüche 10-14, weiter umfassend eine innere Bodenabdeckung (27; 27a-27d), welche auf zumindest einer Bodenplatte angeordnet ist, wobei die innere Bodenabdeckung derart ausgebildet ist, dass sie nach einer Explosion unter dem Fahrzeug zumindest teilweise von aus einem Raum unterhalb der Bodenplatten nach oben strömender Luft entfernt wird.

16. Gepanzertes Landfahrzeug nach einem der vorhergehenden Ansprüche, wobei der innere Boden eine Vielzahl der Bodenplatten, beispielsweise drei oder mehr der Bodenplatten, umfasst, wobei jede Bodenplatte eine Breite zwischen 0,5 m und 1,0 m, vorzugsweise zwischen 0,6 m und 0,8 m aufweist.

17. Verwendung des inneren Boden in dem gepanzerten Landfahrzeug nach einem der vorhergehenden Ansprüche, um das Risiko für Schäden an den Füßen der Insassen des Fahrzeugs im Falle einer Explosion unter dem Fahrzeug zu reduzieren.

## Revendications

1. Véhicule terrestre blindé comprenant une structure de véhicule (1) et un plancher interne (2), le plancher interne (2) comprenant au moins un panneau de plancher (21) suspendu à partir de la structure du véhicule par une pluralité de dispositifs de suspension (3), chaque dispositif de suspension (3) comprenant un élément de ressort pouvant être déformé de manière plastique (32) reliant le panneau de plancher (21) à la structure du véhicule (1),
**caractérisé en ce que**
l'élément de ressort (32) est tendu au préalable pour tirer le panneau de plancher vers le haut de façon à établir une pression contre au moins une partie de butée (38) qui empêche le panneau de plancher d'être tiré au-delà d'une position d'arrêt ;
**en ce que** les dispositifs de suspension (3) sont agencés pour fournir une dissipation d'énergie et une limitation de l'accélération du au moins un panneau de plancher (21) à la suite d'une explosion sous le véhicule, par la déformation plastique sous l'allongement des éléments de ressort suite à l'explosion, de façon à réduire le risque de blessure des pieds des occupants du véhicule ;
et **en ce que** la tension préalable des éléments de ressort est suffisante pour empêcher le panneau de plancher de se déplacer dans la direction verticale pendant une utilisation normale.

2. Véhicule terrestre blindé selon la revendication 1, dans lequel chaque dispositif de suspension (3) comprend ;
une première partie (31) fixée à la structure du véhicule ;
et une seconde partie (33) fixée au panneau de plancher (21) ;
la première partie (31) et la seconde partie (33) étant reliées entre elles par l'élément de ressort (32).

3. Véhicule terrestre blindé selon la revendication 2, dans lequel la seconde partie (33) est fixée au panneau de plancher (21) de sorte que la seconde partie (33) puisse se déplacer horizontalement par rapport au panneau de plancher (21).

4. Véhicule terrestre blindé selon la revendication 3, dans lequel la seconde partie (33) est agencée de façon à s'étendre à travers une ouverture fendue (23) dans le panneau de plancher (21) de sorte que la seconde partie (33) puisse se déplacer horizontalement selon la direction longitudinale de l'ouvelture fendue (23).

5. Véhicule terrestre blindé selon l'une quelconque des revendications 2 à 4, dans lequel la première partie (31) comprend ladite partie de butée (38),

6. Véhicule terrestre blindé selon l'une quelconque des revendications précédentes, dans lequel l'élément de ressort (32) est fixé à un élément fileté permettant le réglage de la tension préalable dans l'élément de ressort (32).

7. Véhicule terrestre blindé selon l'une quelconque des revendications précédentes, dans lequel l'élément de ressort (32) comprend un ressort hélicoïdal.

8. Véhicule terrestre blindé selon l'une quelconque des revendications précédentes, dans lequel l'élément de ressort est agencé pour permettre un allongement de celui-ci d'au moins 50 mm, de préférence d'au moins 60 mm, plus préférentiellement d'au moins 80 mm et d'une manière encore plus préférentielle d'au moins 100 mm entre l'état initial de l'élément de ressort précédant une explosion et l'état de déformation plastique de l'élément de ressort après une explosion.

9. Véhicule terrestre blindé selon l'une quelconque des revendications précédentes, dans lequel le panneau de plancher (21) est suspendu par au moins quatre dispositifs de suspension (3).

10. Véhicule terrestre blindé selon l'une quelconque des revendications précédentes, ledit au moins un panneau de plancher ayant une surface ayant une zone superficielle, ledit panneau de plancher étant pourvu d'une pluralité de perforations (24) pour permettre à l'air de passer d'un espace au-dessous du panneau de plancher vers un espace au-dessus du panneau de plancher en conséquence d'une augmentation de la pression au-dessous du panneau de plancher, lesdites perforations (24) occupant une partie de ladite zone superficielle, ladite partie étant égale à au moins 25% de la zone superficielle, de préférence d'au moins 33% de la zone superficielle.

11. Véhicule terrestre blindé selon la revendication 10, dans lequel le panneau de plancher (21) comprend au moins deux couches (22) placées l'une au-dessus de l'autre.

12. Véhicule terrestre blindé selon la revendication 11, dans lequel au moins deux desdites au moins deux couches (22) sont placées l'une au-dessus de l'autre avec un espacement entre lesdites deux couches (22).

13. Véhicule terrestre blindé selon la revendication 11 ou 12, dans lequel lesdites couches (22) sont soudées l'une à l'autre à une pluralité de points répartis sur la zone superficielle.

14. Véhicule terrestre blindé selon l'une quelconque des revendications précédentes, dans lequel ledit plancher interne comprend une pluralité de panneaux de plancher (21), au moins l'un desdits panneaux de plancher (21) étant espacé (28) d'un panneau adjacent desdits panneaux de plancher (21) d'une distance comprise entre 2 cm et 6 cm.

15. Véhicule terrestre blindé selon l'une quelconque des revendications 10 à 14, comprenant en outre une couverture de plancher interne (27 ; 27a-27d) placée sur au moins un panneau de plancher, ladite couverture de panneau de plancher étant agencée de façon à ce qu'elle soit au moins partiellement enlevée par le flux d'air montant à partir d'un espace situé au-dessous desdits panneaux de plancher, suite à une explosion sous le véhicule.

16. Véhicule terrestre blindé selon l'une quelconque des revendications précédentes, le plancher interne comprenant une pluralité desdits panneaux de plancher, tel que trois desdits panneaux de plancher ou plus, chaque panneau de plancher ayant une largeur comprise entre 0,5 m et 1,0 m, de préférence entre 0,6 m et 0,8 m.

17. Utilisation du plancher interne dans le véhicule terrestre blindé selon l'une quelconque des revendications précédentes pour réduire le risque de blessure des pieds des occupants du véhicule en cas d'explosion sous le véhicule.
